Europäisches Patentamt

European Patent Office

Office européen des brevets

(11) Publication number: **0 182 501**
A2

# EUROPEAN PATENT APPLICATION

(21) Application number: **85307503.4**

(22) Date of filing: **17.10.85**

(51) Int. Cl.⁴: **G 06 F 12/02**

(30) Priority: **20.11.84 US 673441**

(43) Date of publication of application: **28.05.86**
**Bulletin 86/22**

(84) Designated Contracting States: **DE FR GB**

(71) Applicant: **TEKTRONIX, INC., Tektronix Industrial Park D/S Y3-121 4900 S.W. Griffith Drive P.O. Box 500, Beaverton Oregon 97077 (US)**

(72) Inventor: **Bates, Roger D., Route 1 Box 865, Hillsboro Oregon 97124 (US)**

(74) Representative: **Burke, Steven David et al, R.G.C. Jenkins & Co. 12-15, Fetter Lane, London EC4A 1PL (GB)**

(54) **Memory mapping method and apparatus.**

(57) A method of accessing a main random access memory, of the type accessed by sequentially applying row and column addresses, permits a computer program to organize data using a virtual addressing scheme different from a real addressing scheme used to organize the storage of the same data within the main memory. The method comprises the steps of applying a selected portion of a virtual address as a real row address to the main memory, while simultaneously converting another selected portion of the virtual address into a corresponding real column address, and then applying the corresponding real column address to the main memory.

ACTORUM AG

# MEMORY MAPPING METHOD AND APPARATUS

## Background of the Invention

The present invention relates in general to random access memory (RAM) control systems and particularly to such systems wherein virtual memory addresses are mapped into real memory addresses prior to accessing a RAM.

In some processing systems, a program running in the processor generates addresses for data storage and retrieval using a memory allocation scheme convenient to the program, but not necessarily convenient to an operating system managing actual memory allocation. Therefore it has been common to provide a "mapping" RAM wherein the "real" addresses of data stored in a main memory array, according to the memory allocation scheme of the operating system, are themselves stored as data in the mapping RAM at "virtual" addresses generated by a program, according to its memory allocation scheme. Thus whenever a processor wishes to access data in the main memory array, using a virtual address generated by a program, it first reads the real address data located at the virtual address of the mapping RAM, and then accesses the main memory array at the real address thus obtained.

While this method allows the program and the operating system to use different addressing schemes, the processor must undergo an extra read delay whenever it wishes to access the main memory. What is needed, and would be useful, is a means to permit the use of virtual addressing without increasing the time required to access the main memory array.

## Summary of the Invention

To limit the number of required external RAM address bus connections to individual memory chips in a dynamic RAM array, the memory chips are typically addressed in two steps. First, the low order bits of the address are placed on the RAM address bus, connected to each chip, and a row address select (RAS) control line, also linking all memory chips in the array, is strobed to cause a row address latch on each chip to load the low order bits of the real address. Next, the higher order bits of the address are placed on the RAM address bus and a column address select (CAS) control line, leading to the appropriate memory chip, is strobed, thereby causing a column latch in the chip to load the higher order bits of the real address. When both registers of a chip are loaded, data may be read from or written into the addressed memory location of the memory chip.

According to one aspect of the invention, a memory mapping RAM stores the higher order bits of real addresses, used by an operating system to store data in a main RAM array, at addresses in the mapping RAM corresponding to the higher order bits of virtual addresses used by a program to access the same data. The lower order bits of the virtual addresses, generated by the program, are identical to the lower order bits of the corresponding real addresses used by the operating system to access the main RAM, and are therefore not mapped. To access the main memory array, the lower order bits of a virtual address are loaded directly into the row latches of the main RAM array when the RAS line is strobed. At the same time, the higher order bits of the real address are read from the mapping

RAM. These higher order bits of the real address are then loaded into the column latch of the appropriate RAM chip when the associated CAS line is strobed.

According to another aspect of the invention, the access time of the memory mapping RAM is short enough that the higher order real address bits are available in time to be loaded into the column latch when the CAS signal is generated. Therefore the use of memory mapping in the present invention does not increase the time required for a processor to access the main memory.

According to a further aspect of the invention, an extra bit is stored at every virtual memory address in the mapping RAM, the extra bit being of a state indicating the validity or invalidity of the virtual address as a storage location of a valid real address. If the virtual address is invalid, a signal is transmitted to the processor to indicate that the current virtual address is invalid, and the main memory CAS strobe is inhibited.

It is accordingly an object of the present invention to provide a new and improved method and apparatus for converting virtual addresses, used by a program to access data, into real addresses used by an operating system to store the same data in a memory array.

It is another object of the present invention to provide a new and improved memory mapping method and apparatus wherein the use by a program of virtual addressing does not increase memory access time over that required by program use of real addressing.

It is a further object of the present invention to provide a new and improved memory mapping method and apparatus wherein an indicating signal is transmitted to a processor whenever it attempts to use an unmapped virtual address.

The subject matter of the present invention is particularly pointed out and distinctly claimed in the concluding portion of this specification. However, both the organization and method of operation, together with further advantages and objects thereof, may best be understood by reference to the following description taken in connection with accompanying drawings wherein like reference characters refer to like elements.

## Drawings

FIG. 1 is a block diagram of selected portions of a typical memory chip which may be used in conjunction with the present invention,

FIG. 2 is a block diagram of a memory control circuit which may be used in conjunction with the memory chip of FIG. 1,

FIG. 3 is a block diagram of a memory mapping apparatus in accordance with the present invention, and

FIG. 4 is a block diagram showing the mapping RAM and control block of FIG. 4 in more detail.

## Detailed Description

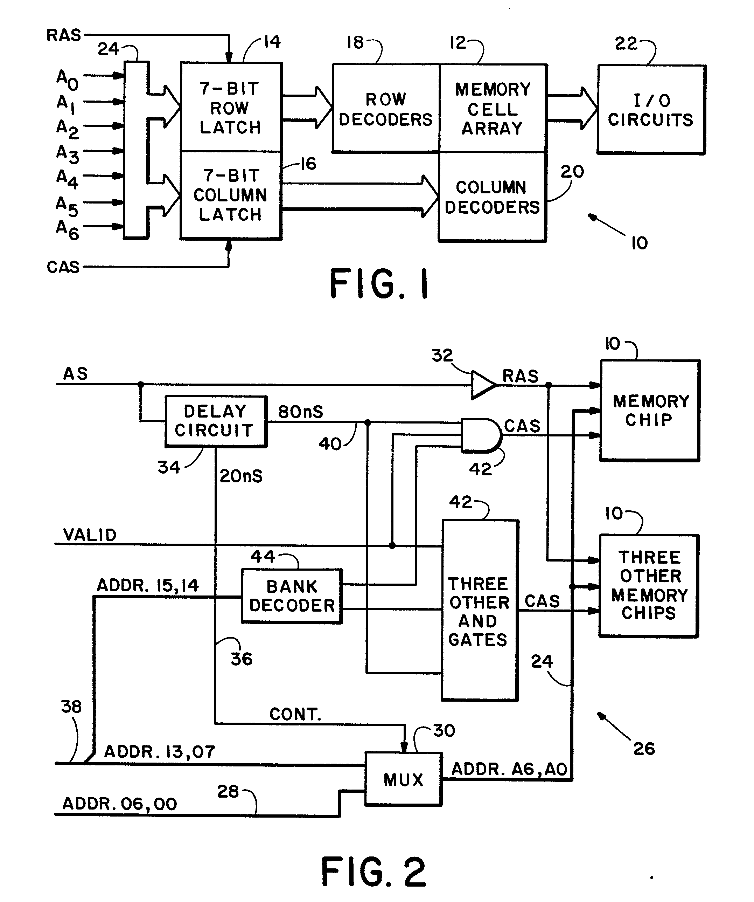

Referring to FIG. 1, selected portions of a typical dynamic 150 nanosecond memory chip 10, adapted to store 16,384 (16K) bytes of data, are illustrated in block diagram form. The chip comprises 16K memory cells arranged in an array 12 of 128 rows and 128 columns. Each memory cell is accessed through I/O circuits 22 during a read or write operation by placing a unique combination of 7-bit row and column addresses in row address latch 14 and column address latch 16, the row and column addresses being decoded and applied to the array by row address decoder 18 and column address decoder 20.

Row register 14 and column latches 16 are loaded in two steps with the appropriate 7-bit address data, A0 to A6, through 7-bit memory address bus 24, connected in parallel to the data inputs of the row and column address latches of memory chip 10. First, the 7-bit row address is placed on bus 24 and a row address select (RAS) signal is applied to row latch 14 to cause the latch to store the row address on bus 24. Then, the 7-bit column address is placed on address bus 24, and the column address select (CAS) signal is applied to column address latch 16, thereby causing the latch to store the column address.

A memory control circuit 26, illustrated in block diagram form in FIG. 2, is adapted for controlling the addressing of a set of four memory chips 10 of FIG. 1. A memory access cycle begins when a controlling processor places the 7-bit row address, bits 00-06 of a 16 bit memory address, on low order address bus 28 applied as an input to a 2 to 1 multiplexer circuit 30. Initially, multiplexer 30 is in a state wherein low order address bus 28 is coupled directly to memory address bus 24, connecting in parallel the seven address inputs A0 to A6 of the four 16K memory chips 10. When the low order address bits are placed on bus 24, an address strobe signal (AS), from a controlling processor, is driven low. The strobe signal is applied to the input of inverting amplifier 32 which generates the RAS signal as its output thereby causing the row latches of all four memory chips to load the 7-bit row address currently on bus 24.

The AS signal is also applied to time delay circuit 34 which produces a signal on control line 36, approximatey 20 nanoseconds thereafter. Control line 36 is tied to the control input of multiplexer 30 such that when line 36 is energized, multiplexer 30 changes state, disconnecting the low order address bus 28 from memory address bus 24 while coupling address bits 07-13 on high order address bus 38 to memory address bus 24. Approximately 80 nanoseconds after receiving the AS signal, delay circuit 34 produces a second output signal on control line 40, connected in parallel to one input of each of four AND gates 42, one for each memory chip 10.

Two other signals, VALID and BANK are applied to two other inputs of each AND gate 42, a common VALID signal being applied to each AND gate 42, while a seperate BANK signal, produced by bank decoder 44 is applied to each AND gate 42. When all three signals applied to any AND gate 42 are high, the AND gate produces a CAS signal which is transmitted to an associated memory chip 10, causing that chip to load the column address on memory address bus 24 into its column address latch 16, thereby providing processor access to the selected memory cell of the chip 10 at the addressed location.

The highest order bits, 14-15 of the 16 bit address on high order bit bus 38 are applied to bank decoder 44, and are used by BANK decoder 44 to determine which AND gate of the four is to receive a high BANK signal, thereby determining which chip

10 of the four in memory array 11 is to be addressed by the row and column addresses on busses 28 and 38. The VALID signal generated by external circuits, described in more detail below, is used to prevent control circuit 26 from generating a CAS signal when the higher order address data on bus 38 is invalid.

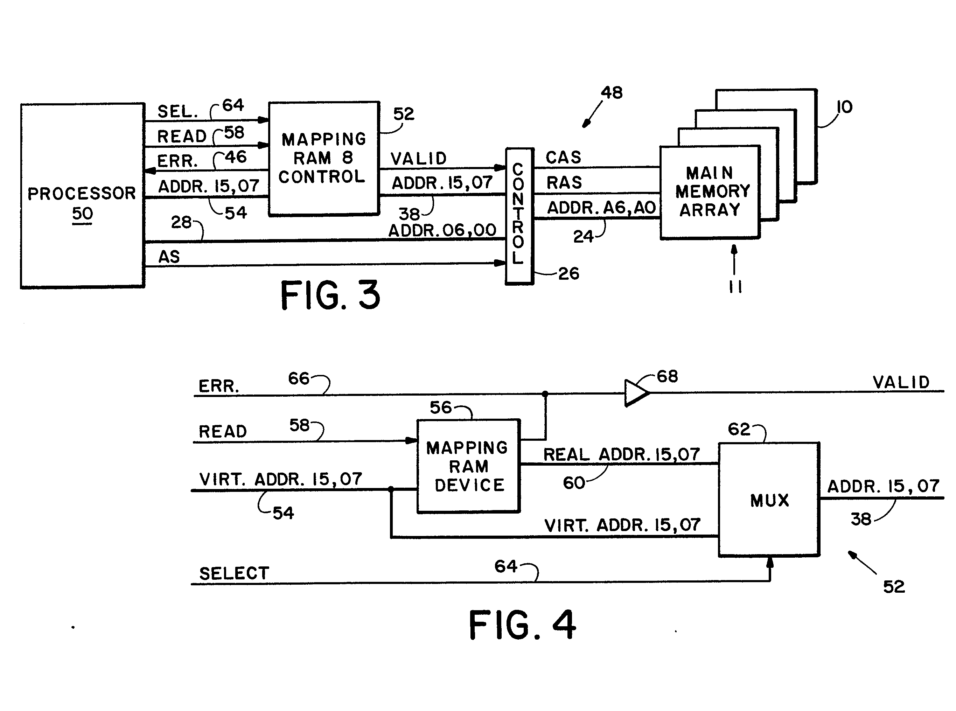

The memory chips 10 of the type shown in FIG 1, along with a memory control system 26, shown in FIG. 2, are incorporated into a memory mapping system 48, illustrated in block diagram form in FIG. 3. Mapping system 48 is adapted to permit a program running on processor 50 to utilize a "virtual" addressing system, convenient to the program, while an operating system utilizes a different, "real" addressing system to control the organization of memory array 11. Memory array 11 comprises four 16K memory chips 10 of the type shown in FIG. 1 wherein addressing occurs in two steps using the RAS and CAS signals from memory controller 26 to sucessively load row and column address on memory address bus 24 into row and column latches within the memory array 11. Control circuit 26 of FIG. 3 is similar to that depicted in more detail in FIG. 2.

When a program running on processor 50 generates a virtual address, the seven lower order bits 00 to 06 of the virtual address are routed directly from processor 50 to control circuit 26 on low order bit address bus 28. At the same time, the nine higher order address bits 07-15 of the virtual address are routed to mapping RAM and control circuit 52 over high order bit, virtual address bus 54. Mapping RAM and control circuit 52, illustrated in block diagram form in FIG. 4, is adapted to store the higher order real bits of a real address at the corresponding virtual address generated by the processor. Processor 50 places the higher order bits 07 to 15 of the virtual address on high order virtual address bus 54 of FIG. 4, leading to mapping RAM device 56, and then generates a READ signal on contol line 58, causing RAM device 56 to output the corresponding higher order bits of the real address on data bus 60.

Data bus 60 carries the higher order real address bits to one input of 2 to 1 multiplexer 62 while the higher bits of the corresponding virtual address on high order bit address bus 54 are applied to the second input of the multiplexer. The output of multiplexer 62 is placed on real address bus 38 which carries the higher order address bits to control circuit 26 of FIG. 3. When a program running on processor 50 is using virtual addressing, multiplexer 62 places the real addresses bits from mapping RAM 56 on address bus 38 for use in accessing the main memory array 11. However, when a program running on processor 50 is generating real addresses, processor 50 generates a signal on mode select control line 64 to change the state of multiplexer 62 such that the multiplexer places the higher order address bits on address bus 54 on real address bus 38, thereby bypassing the memory mapping process.

Mapping RAM 56 stores one extra indicating bit at each memory location therein. If the bit is high, it indicates that the virtual address of the mapping RAM does not store a valid real address, and therefore indicates that any program attempting to read a real address at that virtual address is doing so in error. When data at a virtual address is accessed by processor 50, the indicating bit is placed as an ERR signal on RAM device 56 data output line 66, leading back to processor 50. If the bit is high, processor 50 may abort the read cycle or take other appropriate action. Data output line 66 is also connected to inverter 68 which produces the aforementioned VALID signal, controlling circuit 26 of FIGS. 2 and 3. If the indicating bit on line 66 is high, the VALID signal will be low, and control circuit 26 will not generate a CAS signal to complete a main memory access cycle.

Thus, when the system is in the memory mapping mode, the lower order bits 00 to 06, of the 16 bit address generated by a program running on processor 50 of FIG. 3, are applied directly to control circuit 26 through bus 28. Control circuit 26 places the low order bits on memory address bus 24 to main memory array 11. Processor 50 then transmits an AS signal to control circuit 26, causing the control circuit to transmit a RAS signal to memory array 11 such that each memory chip 10 in array 11 loads the low order bits into its row address latch. In the meantime, processor 50 transmits the higher order address bits 07-15, of the virtual address, over bus 54 to mapping ram and control circuit 52 which in turn transmits the corresponding higher order bits of the real address over high order bit address bus 38 to control circuit 26.

Approximately 20 nanoseconds after the processor generates the AS signal, control circuit 26 disconnects memory address bus 24 from low order bit address bus 28 and connects bus 24 to high order bit address bus 38. Approximately 80 nanoseconds after receiving the AS signal, provided that the VALID signal from mapping RAM and control circuit 52 is high, control circuit 26 generates the appropriate CAS signal to load the higher order bits 07 - 13 on bus 24 into the column address latch of one memory chip 10 in main memory array 11, the memory chip to receive the CAS signal being determined by the states of highest order bits 14 and 15 of the real address on bus 38.

In order for the memory mapping process to function efficiently, the access time of mapping RAM 56 should preferably be not more than 50 nanoseconds, somewhat less than the 80 nanoseconds the time control circuit 26 requires to store the low order bits in the row address latches of memory array 10, to switch memory address bus 24 from low order address bus 28 to high order address bus 38, and to generate the CAS signal. With the speed of memory mapping RAM sufficiently high, program use of virtual addressing in conjunction with the present invention, does not increase the access time of the main RAM array over that required for a program generating real addresses.

It is desired that the lower bits of the virtual address, generated by a program running on processor 50, be identical to the lower bits of the real address, used by an operating system to store the data in memory array 11. In most operating systems, memory allocation is conveniently performed on larger blocks of memory, addressed by the higher order bits of the real address and there is little advantage to the operating system in mapping the lower order bits of the address, since the operating system can conveniently function with any memory arrangement within each larger block of memory.

0182501

While a preferred embodiment of the present invention has been shown and described, it will be apparent to those skilled in the art that many changes and modifications may be made without departing from the invention in its broader aspects. For instance, while the present invention has been described for purposes of illustration as being utilized in conjunction with a sixteen- bit addressing scheme, and with an array of four, 16K memory chips, the present invention could be employed to facilitate virtual addressing in a system employing any number of address bits, and any size or arrangement of memory array, provided the memory array is of the type addressed in a two-step manner as described hereinabove. The appended claims are therefore intended to cover all such changes and modifications as fall within the true spirit and scope of the invention.

12

## Claims

1. A method of accessing a main random access memory permitting a computer program to organize data using a virtual addressing scheme different from a real addressing scheme used to organize the storage of the same data within the main memory, the main memory being of the type accessed by sequentially applying a real row and a real column address, the method comprising the steps of:

      a. applying a selected portion of a virtual address as a real row address to the main memory,

      b. converting another selected portion of the virtual address into a corresponding real column address, and

      c. applying the corresponding real column address to the main memory.

2. A method as in claim 1 wherein steps a and b begin at the same time.

3. A method as in claim 1 wherein said another selected portion of the virtual address is converted into said corresponding real column address by utilizing a mapping random access memory which stores the real column address at a location determined by said another virtual address portion.

4. A method as in claim 1 wherein the selected virtual address portion comprises selected lower order bits of the virtual address and wherein the another selected portion of the virtual address comprises selected higher order bits of the virtual address.

5. A method as in claim 1 wherein an indicating bit is additionally stored at each mapping memory location, the state of the indicating bit being set according to the validity of real address data stored at the same location.

6. A method of accessing a main random access memory permitting a computer program to organize . data using a virtual addressing scheme different from a real addressing scheme used to organize the storage of the same data within the main memory, the main memory being of the type accessed by sequentially applying a real row and a real column address, the method comprising the steps of:

a. applying a selected portion of a virtual address as a real row address to the main memory,

b. converting another selected portion of the virtual address into a corresponding real column address and an indicating bit, the state of the indicating bit being set according to the validity of the associated real column address data,

c. applying the corresponding real column address data to the main memory when said indicating bit indicates that the real column address is valid, and

d. generating an error signal to a processor running the program when said indicating bit indicates that the real column address data is invalid.

7. An apparatus for accessing a main random access memory permitting a computer program to organize data using a virtual addressing scheme different from a real addressing scheme used to organize the storage of the same data within the main memory, the main memory being of the type accessed by sequentially applying a real row and a real column address, the apparatus comprising:

means to apply a selected portion of a virtual address as a real row address to the main memory,

means to convert another selected portion of the virtual address into a corresponding real column address, and

means to apply the corresponding real column address to the main memory.

8. An apparatus as in claim 7 wherein the converting means comprises a mapping random access memory wherein the real column address is stored at a memory location accessed by the corresponding selected porton of the virtual address.

9. An apparatus for accessing a main random access memory permitting a computer program to organize data using a virtual addressing scheme different from a real addressing scheme used to organize the storage of the same data within the main memory, the main memory being of the type accessed by sequentially applying row and column addresses, the apparatus comprising:

a processor for running the program,

a mapping memory system for storing real column address data at memory locations corresponding to selected bits of virtual addresses generated by the program,

a main memory controller for sequentially applying the row and column addresses to the main memory,

a first address bus for transmitting the selected bits of virtual addresses from the processor to the mapping system,

a second address bus for transmitting other selected bits of the virtual addresses to the main memory controller, and

a data bus for transmitting real column address data from the mapping memory system to the memory controller.

10. An apparatus as in claim 9 wherein said real column address data are produced by the memory mapping system in response to transmission from the processor to the mapping system of said selected bits of the virtual addresses.

11. An apparatus as in claim 10 wherein the memory controller applies said other selected bits of the virtual address to the main memory as the row address, and then applies said real column address data, transmitted by the data bus to the main memory, as the column address.

FIG. 1

FIG. 2

FIG. 3

FIG. 4